# EUROPEAN PATENT SPECIFICATION

(11) **EP 0 701 589 B1**
(45) Date of publication and mention of the grant of the patent: **03.03.1999**
(21) Application number: 94918178.8
(22) Date of filing: 26.05.1994
(51) Int. Cl.: C08L 25/02, C08J 9/12

(54) **IMPROVED STYRENIC RESIN MOLDING COMPOSITION AND FOAM**
VERBESSERTE STYROLHARZ-FORMZUSAMMENSETZUNG UND SCHAUM
MOUSSE ET COMPOSITION DE MOULAGE A RESINE AU STYRENE AMELIOREES

(30) Priority: 04.06.1993 US 71794; 04.06.1993 US 71792
(43) Date of publication of application: 20.03.1996
(73) Proprietor: THE DOW CHEMICAL COMPANY, Midland, Michigan 48674 (US)
(72) Inventor: DEMIRÖRS, Mehmet, NL-4535 CA Terneuzen (NL); VERAART, Rudi, H., E., NL-4527 GJ Aardenburg (NL); VO, Chau, V., F-67460 Souffelweyersheim (FR)
(74) Representative: Casalonga, Axel
(86) International application number: US9406112
(87) International publication number: WO9429383

(56) References cited:
- BE-A- 633 239
- GB-A- 2 043 648
- US-A- 4 959 412
- CHEMICAL ABSTRACTS, vol. 80, no. 6, 11 February 1974, Columbus, Ohio, US; abstract no. 27913, 'photodegradable resin compositions' page 35 ;

## Description

The present invention relates to optionally rubber-reinforced styrenic polymers and to a polymeric foam, particularly a styrenic foam.

Styrenic molding polymers are useful for preparing molded articles such as small appliances, toys, video cassettes and housings for electronic equipment such as televisions. For these applications, it is highly desirable to have a resin with good flow properties to facilitate the high speed production of complex molded articles. It is also important to have a resin with good physical properties such as rigidity, as expressed by flexural or tensile properties. For most applications, long-term load bearing properties are required. These properties are known to be related to parameters such as flexural strength and flexural modulus for polystyrene, and tensile yield stress, tensile modulus and impact strength for high impact polystyrene. In these molding applications it is also desirable to employ resins with good thermal properties. The resins should be capable of sustaining their load bearing characteristics even at elevated temperatures.

The physical properties of styrene polymers generally improve as the molecular weight of the polymers increases. For resins used in injection molding, the processability of the resin generally decreases as the molecular weight increases beyond a certain point. Accordingly, the choice of molding resins having sufficient properties involves a compromise between physical property requirements and processing requirements. Such compromises will limit the molecular weight range, and hence the physical property range, for a given polymer.

It is common practice to improve the processability of styrenic molding resins by using plasticizers which generally are low molecular weight organic compounds which are miscible with the polymer matrix and give improved processability. Dioctyl phthalate, and other aromatic esters, are commonly employed as plasticizers in acrylonitrile butadiene styrene terpolymers (ABS). White mineral oil is commonly used as a plasticizer for styrene polymers. The use of mineral oil generally improves the flow properties of a molding resin, but leads to deterioration of other properties such as rigidity, toughness, and the heat distortion temperature.

U.S. Patent 4,826,919 discloses blends of polyphenylene ether resin, rubber-modified alkenyl aromatic resin, and copolymers of styrene and alpha-methylstyrene having a weight average molecular weight of less than 5,000. The compositions optionally contain a thermoplastic elastomer. The copolymer is employed in an amount which improves the melt flow rate of the blend of polyphenylene ether and rubber-modified alkenyl aromatic resin. The copolymer additive is said to offer greater melt flow improvement compared to higher molecular weight styrenic homopolymers or copolymers. However, the effect is demonstrated only for bromine-containing compositions, and the effect of the bromine on the melt flow behavior is not mentioned.

Thermoplastic foams such as styrenic polymer foams, are widely used in the fields of construction, civil engineering and thermal insulation. The styrenic polymer foam suitable for such apolications desirably is extruded and nas good dimensional stability and relatively small cells. These foams are the so-called extruded foams. Extruded foams are also employed In the so-called decorative field wnerein a foam plank may be cut into a decorative foam and be used as is or used as a base for furtner decorative material. For a considerable period of time, styrenic polymer foams have been extruded employing a variety of organic blowing agents, such as chlorofluorocarbons (CFC's), hydrochlorofluorocarbons (HCFC's) and other halogenated hydrocarbons as well as mixtures thereof. However, large efforts currently are being made to replace CFC's, and other fully halogenated hydrocarbons with more environmentally acceptable blowing agents due to increased environmental concerns about ozone depletion, greenhouse effects and air quality in general.

In view of the deficiencies of known styrenic resin compositions and foams, it would be highly desirable to have a styrenic molding resin having increased flow properties while having comparable physical properties such as rigidity, toughness, and heat distortion temperature.

Further, it would be desirable to provide a process for preparing a low density styrenic polymer foam using a partially or entirely pristine, that is, nonhalogenated, blowing agent. Furthermore, it also would be highly desirable to provide a low density styrenic polymer foam, prepared using a partially or entirely pristine blowing agent, with improved processability without sacrificing other physical properties such as compressive strength and dimensional stability.

The molding resin composition of the present invention is such an improved monovinylidene aromatic polymer resin composition comprising:
a) an optionally rubber-reinforced monovinylidene aromatic polymer
having a weight average molecular weight of at least 100,000; and
(b) a plasticizing amount of from 1 to 25 weight percent, based on the total weight of the matrix polymer, the plasticizer and the optional rubbery polymer, of a low molecular weight polymer of limonene having a weight average molecular weight of from 1,000 to 70,000, a volatiles content of up to 30 percent and a glass-transition temperature of at least 25° C.

The composition surprisingly has improvided flow characteristics without having a substantial decrease in toughness and rigidity. In its non-rubber-reinforced form, the composition surprisingly is as clear as normal (that is, not rubber-reinforced) polystyrene. The composition of the present invention can be used in the preparation of molded articles, such as toys, small appliances, video cassettes, and housings for electronic equipment.

The invention further relates to a process for producing a closed-cell polymer foam comprising heating the composition as defined hereinbefore to a temperature sufficient to provide a molten polymer; admixing a blowing agent with said molten polymer to provide a plasticized mixture; heating the mixture to a temperature and applying a pressure such that the plasticized mixture does not foam; thereafter, reducing the temperature of the mixture to increase its viscosity; and extruding the plasticized mixture into a zone at a temperature and pressure sufficient to permit foaming.

The invention further includes the resulting polymer foam, and an expandable or foamable monovinylidene aromatic poiymer formulation comprising the composition of the invention and a blowing agent. Advantageously, the foam of the invention can be produced using only CO₂ as a blowing agent.

The plasticizer of the present invention serves to improve the flow properties of the host polymer while maintaining or only slightly lowering rigidity and toughness while, surprisingly, maintaining or only slightly lowering the heat distortion temperature. Advantageously, the plasticizer is a solid at room temperature and pressure, and is a low molecular weight polymer of limonene, with d-limonene being the preferred limonene. The plasticizer can be a copolymer or a homopolymer. The plasticizer has a weight average molecular weight of at least 1,000, preferably at least 1,200, more preferably at least 1,500, and most preferably greater than or equal to 5,000. Advantageously the plasticizer has a molecular weight of less than 70,000, preferably less than about 50,000, more preferably less than about 30,000, and most preferably less than about 25,000.

The Tg of the plasticizer is at least 25°C. More preferably, the Tg of the plasticizer is at least about 50°C and most preferably is at least about 70°C. The volatiles content of the plasticizer is lower than 30 percent otherwise an excessive drop in the heat properties of the final blend can be expected. Preferably, the volatiles content is less than about 25 percent, and more preferably is less than about 20 percent. For the purposes of the present invention, the volatiles content is measured at 200°C and 2 mm Hg vacuum for 100 minutes.

The plasticizer is employed in a plasticizing amount. Suitably, the amount is such that the melt flow properties of the composition are improved while the toughness and rigidity of the composition are also maintained or only slightly reduced. The plasticizer is employed in an amount which is from 1 to 25 weight percent based on the total weight of the matrix polymer, the plasticizer, and the optional rubbery polymer. More preferably, the amount of plasticizer is from 2 to 20 weight percent, and most preferably the amount is from a 2.5 to 15 percent. Mixtures of plasticizers of the invention can be employed. Advantageously, the polymeric plasticizer is compatible with the monovinylidene aromatic polymer matrix and has a significantly lower viscosity.

The low molecular weight polymer plasticizer can be prepared by any of the known polymerization methods known to those skilled in the art including, for example, anionic, cationic or free radical polymerization. Additionally, many such polymers are commercially available. When a comonomer is employed in the preparation of the plasticizer, the amount of comonomer suitably is less than 50 percent and preferably is less than 20 percent based on the total weight of residual monomer units in the plasticizer. Examples of other comonomers for the plasticizer include, for example, styrene, which is preferred, and the monomers and comonomers described hereinbelow as being useful in the preparation of the monovinylidene aromatic polymer resin.

The optionally rubber-reinforced monovinylidene aromatic polymer resins are well-known to those skilled in the art, are widely available commercially, and can be prepared by any of the several polymerization methods known to those skilled in the art including, for example anionic, cationic or free radical, which is preferred, polymerization. The rubber-modified polymers can be prepared by well-known methods including, for example, mass, emulsion, suspension and mass suspension methods. Mass polymerization is preferred. In general, continuous methods are employed for polymerizing the monovinyl aromatic compound. The weight average molecular weight of the monovinylidene aromatic polymer resin employed in the present invention is at least 100,000 and preferably is at least about 130,000. The weight average molecular weight of the monovinylidene aromatic polymer resin advantageously is less than about 700,000, and preferably is less than about 400,000.

The optionally rubber-reinforced polymer resins of the present invention are derived from one or more monovinyl aromatic compounds. Representative monovinyl aromatic compounds include styrene; al kyl substituted styrenes such as alpha-alkyl-styrenes (for example, alpha-methylstyrene and alpha-ethylstyrene) and ring alkylated styrenes and isomers thereof (for example, ortho ethyl styrene, 2,4-dimethyl styrene and vinyltoluene, particularly, ortho or para vinyl toluene); ring substituted halo-styrenes such as chloro-styrene and 2,4-dichloro-styrene; and styrenes substituted with both a halo and alkyl group such as 2-chloro-4--methylstyrene; and vinyl anthracene. In general, the preferred monovinyl aromatic monomers are styrene, alpha-methylstyrene, one or more of the vinyl toluene isomers, and/or mixture of two or more of these, with styrene being the most preferred monovinyl aromatic compound.

The monomer mixture may optionally comprise minor amounts of one or more additional comonomers, preferably in an amount less than 10 percent by weight of the polymerizable monomer mixture. Suitable comonomers are unsaturated nitriles, for example acrylonitrile; alkyl acrylates and alkyl methacrylates, for example methyl methacrylate or n-butylacrylate; ethylenically unsaturated carboxylic acid monomers; and ethylenically unsaturated carboxylic acid derivative monomers including anhydrides and amides such as maleic anhydride, and maleimides such as N-phenyl maleimide.

The rubbers preferably employed in the rubber-modified resins are those polymers and copolymers which exhibit a second order transition temperature which is not higher than 0°C, preferably not higher than -20°C, and more preferably not higher than -40°C as determined or approximated using conventional techniques, for example, ASTM Test Method D-746-52 T.

Highly preferred rubbers are alkadiene polymers. Suitable alkadienes are 1,3-conjugated dienes such as butadiene, isoprene, chloroprene or piperylene. Most preferred are homopolymers (excepting any coupling monomers) prepared from 1,3-conjugated dienes, with such homopolymers of 1,3-butadiene being especially preferred. Alkadiene copolymer rubbers containing small amounts, for example less than 15, preferably less than 10 weight percent, of other monomers such as monovinyl aromatics can also be employed.

As used herein, the particle size is the diameter of the rubber particles as measured in the resultant product, including all occlusions of matrix polymer within rubber particles, which occlusions are generally present in the disperse rubber particles of a rubber-reinforced polymer prepared using mass polymerization techniques. Rubber particle morphologies, sizes and distributions may be determined using conventional techniques such as (for larger particles) using a Coulter Counter (Coulter Counter is a trademark of Coulter Electronics) or, particularly for smaller particles, transmission electron microscopy.

The rubber is advantageously employed in amounts such that the rubber-reinforced polymer product contains from 2 to 20 percent, preferably from 3 to 17 percent, more preferably 3 to 15 weight percent rubber or rubber equivalent.

The term "rubber" or "rubber equivalent" as used herein to indicate weight amounts of rubber material is intended to mean, for a rubber homopolymer (such as polybutadiene), simply the amount of rubber, and for a block copolymer, the amount of the copolymer made up from monomer(s) which, when homopolymerized form a rubbery polymer. For example, for calculating the amount of rubber in a composition where a butadiene-styrene block copolymer rubber has been employed, the "rubber" or "rubber equivalent" of the composition is calculated based on only the butadiene component in the block copolymer. Obviously where physical properties or other aspects of the rubber material are measured, the complete rubber material including any comonomers is referred to.

The monovinylidene aromatic polymer resin can also contain other additives such as additional plasticizers or lubricants such as mineral oil, butyl stearate or dioctyl phthalate; stabilizers, including antioxidants (for example, alkylated phenols such as di-tert-butyl-p-cresol or phosphites such as trisnonyl phenyl phosphite); mold release agents, for example, zinc stearate; flame retardants and pigments. The compositions of the invention advantageously are substantially free of polyphenylene oxide.

The compositions of the present invention can be prepared by mixing the plasticizer and the styrenic resin using polymer compounding methods well known to those skilled in the art including, for example, dry blending and extrusion. The compositions of the invention advantageously exhibit improved melt flow properties while essentially maintaining other important physical properties such as rigidity, toughness, heat distortion temperature, and, in the case of clear matrix polymers, transparency.

The compositions of the present invention advantageously can be employed in the preparation of styrenic polymer foam. Some advantages of using the composition of the present invention in a process to prepare foam include: reduced pressure drop across the extrusion line; lower foam density; and maintenance of good mechanical and heat resistance properties of the foam.

The foam blowing method of the present invention comprises foaming a mixture of the styrenic resin of the invention and a blowing agent to produce a styrenic foam. In a preferred embodiment of the method of the invention, the method comprises producing a styrenic foam by heating the styrenic resin in an extruder to produce a molten resin; introducing into the molten resin a blowing agent to produce a plasticized extrusion mass under a pressure sufficient to prevent foaming of the extrusion mass; and extruding the extrusion mass through a die into a zone having a temperature and pressure sufficient to permit foaming of the extrusion mass to produce the styrenic foam.

The blowing agent, that is, foaming agent, used herein can be any known in the art for thermoplastic foams. See, for example, U.S. Patents 3,770,666; 4,311,636; 4,636,527; 4,438,224; 3,420,786; and 4,421,866. Examples of such blowing agents include commonly used liquid or gaseous organic compounds which do not dissolve the polymer and which have a boiling point below the softening point of the polymer. A wide variety of volatile fluid blowing agents which are carbon-containing compounds can be utilized. They include such materials as the aliphatic or cycloaliphatic hydrocarbons including ethane, ethylene, propane, propylene, butane, butylene, isobutane, pentane, neopentane, isopentane, hexane, heptane, cyclohexane and mixtures thereof, as well as fully or partially halogenated hydrocarbons such as methylene chloride, chlorodifluoromethane; 1-chloro-1,1-difluoroethane; 1,1,1,2-tetrafluoroethane; 2-chloro- 1,1,1,2-tetrafluoroethane, pentafluoroethane, 2,1,1,1-dichlorodifluoroethane, 1,1-difluoroethane and 1,1,1-trifluoroethane and 1,1-difluoroethane. Preferably, the blowing agents generally exhibit a boiling point of not greater than 100°C at 100 kPa absolute pressure. Other useful fluid blowing agents are trimethylsilane and the tetraalkyl silanes such as tetramethylsilane, trimethylisopropylsilane and trimethyl n-propylsilane, having a boiling point not higher than 100°C at 100 kPa absolute pressure.

Mixtures of blowing agents may be employed. The blowing agent is employed in an amount sufficient to enable the production of the foam. It is advantageous to use 3 to 18 percent by weight of blowing agent based on the polymer, preferably 4 to 15 percent.

Due to environmental concerns, it is preferred to employ blowing agents having an ozone depletion potential of zero or little. It is preferred to employ a partially or entirely pristine blowing agent. The term pristine blowing agent, as used herein, is meant to define nonhalogenated blowing agents such as, for example, carbon dioxide, nitrogen, water and argon. In one embodiment it is preferred to use carbon dioxide alone or in admixture with one or more of the previously described blowing agents. In a particularly preferred embodiment, CO₂ is the only blowing agent. In a preferred embodiment of the invention, the blowing agent is a mixture of CO₂ and a lower alcohol of from 1 to 6 carbon atoms, more preferably up to 4 carbon atoms. Examples of lower alcohols include, for example, methanol, ethanol, isopropanol, propanol, butanol, pentanol and hexanol, with ethanol being more preferred. In another preferred embodiment, the blowing agent is a mixture of CO₂ and a hydrocarbon blowing agent, with alkanes being preferred.

The blowing agent employed in the present invention preferably comprises 5 weight percent or more, more preferably 10 weight percent or more, and most preferably 20 weight percent or more carbon dioxide based upon the total weight of the blowing agent. It is advantageous to employ as much carbon dioxide as possible in the blowing agent while still making a desirable foam structure because carbon dioxide is economical and does not harm the environment.

Small amounts of water (0.1 to 4 weight percent) may be used in the foam preparation process with or without an appropriate solubilizing or dispersing agent such as an alcohol, glycol or surfactant. In the preparation of foams in accordance with the method of the invention, it is often desirable to add a nucleating agent to the styrenic resin. These nucleating agents serve primarily to increase cell count and reduce the cell size in the foam and are used in an amount of 0.1 part by weight to 4 parts by weight per 100 parts resin. For example, talc, sodium bicarbonate/citric acid and calcium silicate are suitable nucleating agents for reducing cell size. Talc is a preferred nucleating agent. Various other additives, for example, flame retardant additives, color concentrates, stabilizers, anti-oxidants or lubricants also may be used depending on the end use of the styrenic foam.

The invention comprises a method for producing a styrenic foam having a thickness of from 0.10 to 10.16 cm (0.04 to 4.0 inches) or more, using the blowing agent compositions of the invention. Packaging foams are anywhere from 0.10 to 0.51 cm (0.04 to 0.200 inches), while insulating foams may be as thick as 10.16 cm (4.0 inches) or higher. In the preferred method of the invention, a styrenic foam is produced from a "styrenic resin," which means a solid polymer of one or more polymerizable monovinyl aromatic compounds or a compatible mixture of such polymers.

In the method of the invention, the styrenic resin is mixed with a blowing agent composition and the resulting mixture is then foamed according to methods well-known to those skilled in the art. Preferably, the foaming is carried out with the use of an extruder, wherein the styrenic polymer is heated to a temperature of from 200 to 280°C to produce a molten polymer and the blowing agent is then introduced into the extruder where it is mixed with the molten polymer under pressures such that the resulting plasticized extrusion mass does not foam, but its viscosity decreases. The extrusion mass is then cooled. Cooling increases the viscosity and the melt strength of the mass prior to extrusion. The mass is then extruded through a die of any desirable shape at a controlled temperature, usually 100 to 150°C, the reduced pressure outside the extruder permitting the extrusion mass to foam.

In practicing the method of the invention, the blowing agent may be added to the styrenic resin in any desirable manner and preferably is added by injection of a stream of the blowing agent composition directly into the molten styrenic resin in the extruder. The blowing agent should be mixed thoroughly with the styrenic resin before the blowing agent and styrenic resin mass is extruded from the die. This is necessary to produce a foam having uniform density and cellular structure.

The extrusion mass comprising the molten resin and the blowing agent composition is extruded into an expansion zone within which foam formation and expansion takes place. Any suitable extrusion equipment capable of processing foamable styrenic compositions can be used for the extrusion. Single or multiple-screw extruders can be used. Softening the polymer and mixing with the blowing agent take place during working of the polymer between flights of the screw or screws, which also serve to convey the extrusion mass to the extruder die. Screw speed and extruder barrel temperature should be such as to achieve adequate mixing and softening but not so high as to degrade the composition being processed.

The foams can be used in the form prepared, cut into other shapes, further shaped by application of heat and pressure or otherwise machined or formed into shaped articles of desired size and shape.

The foam structure is preferably closed-cell, and has a closed-cell content of at least 90 percent according to ASTM D2856-87. The foam structure preferably has a density of 16 to 80 kilograms per cubic meter according to ASTM D-3575. The foam further preferably has an average cell size of 0.05 to 2.4 millimeters.

The following experiments illustrate the present invention. All parts and percentages are by weight and all temperatures are degrees Celsius unless otherwise indicated. The abbreviations used in the tables include Mw (weight average molecular weight), Mn (number average molecular weight), PAMS (polyalphamethylstyrene), SAMS (styrene alpha-methylstyrene copolymer) and Wt% (weight percent).

### Example 1 - Polystyrene plus PAMS (comparative example)

Polymer formulations are prepared by dry blending a small quantity of plasticizer with a general purpose polystyrene resin. The polystyrene resin is a non-plasticized high molecular weight resin with an Mw of 320,000 a.m.u. and a polydispersity ratio (that is, the ratio Mw/Mn) of 2.4. The dry blend is then extruded to obtain a homogeneous blend. The extrudate is cut into small granules and all the testing is done on the formulation of these small granules.

Two poly(alpha-methylstyrene) polymers are employed as the plasticizer. The first is a low molecular weight homopolymer of alpha-methylstyrene, designated PAMS-A, which is commercially available from Amoco Chemical Company as Resin 18-240. It has an Mw of 6,700 and an Mn of 500. It contains approximately 20 percent volatile components as measured at 200°C for 100 minutes under a vacuum of 2 mm Hg. PAMS-A has a glass transition temperature of 122°C as measured by differential scanning calorimetry (DSC). The second polymer, PAMS-B, is commercially available from Amoco Chemical Company under the designation Resin 18-290. It is a homopolymer of alpha-methylstyrene with a glass-transition temperature of 142°C, an Mw of 11,900 and an Mn of 400. The total volatile content for PAMS-B is 14 percent.

As a comparative experiment the base non-plasticized polystyrene is blended with 2.5 percent white mineral oil.

Testing is done according to the following standard test procedures. The results of the testing are given in Table 1.

As used herein, the weight average molecular weight, Mw, and number average molecular weight, Mn, for the polymers are determined by the gel permeation chromatographic techniques described by ASTM test method D-3536 (polystyrene standard) and expressed without correction for the differences between polymers and polystyrene standards.

Vicat heat distortion temperature (HDT) is measured using injection molded test bars according to ASTM test method D1525-87, rate B, load 1 kg.

The melt flow rate (MFR) is measured using a Zwick MFR Measurement Apparatus according to the test procedure ASTM D-1238-86 at 200°C with a 5 kg load.

Flexural strength and flexural modulus are measured on injection molded bars prepared using an Arburg All Rounder 170 CMD injection molding machine. The following conditions are employed for the machine : the temperature profile is 210°C, 215°C, and 220°C; and the nozzle temperature is 225°C. The mold temperature is 30°C; the injection speed is 20 cm³/sec; and the injection pressure is 1,300 bar.

Flexural properties are determined using a Zwick Tester in 3-point bending mode according to the test procedure ASTM D-790.

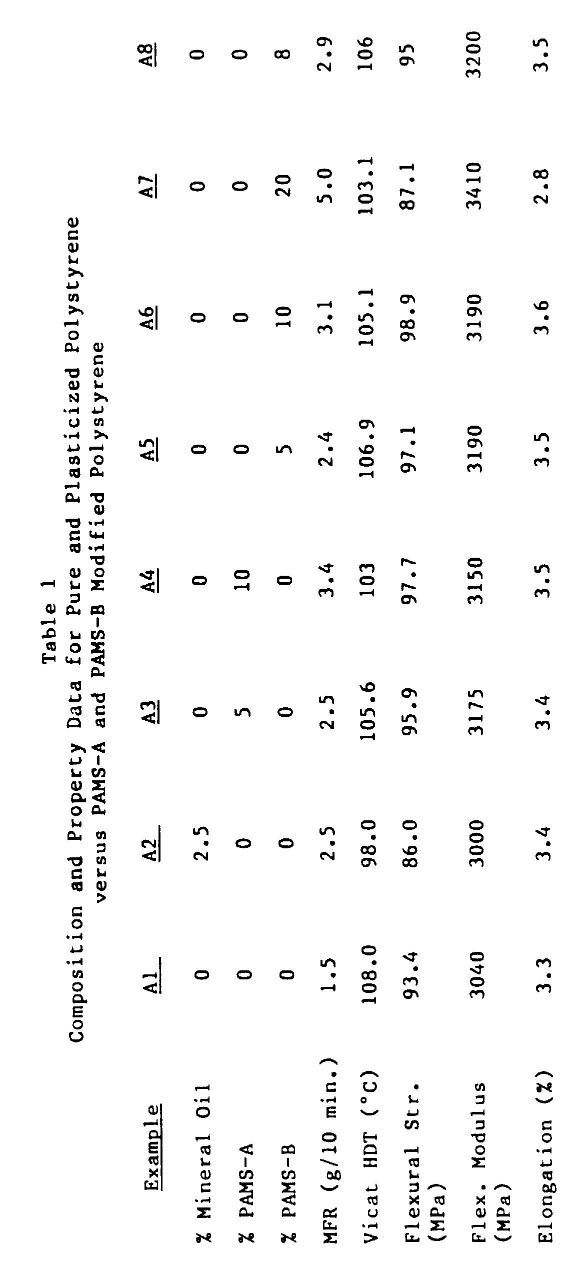

The data in Table 1 indicate that incorporation of PAMS-A and PAMS-B at levels between 5 percent and 20 percent results in a polymer that possesses improved properties. Incorporation of mineral oil into the polymer improves the melt flow rate but also causes a dramatic reduction in flexural strength and Vicat heat distortion temperature. The unplasticized base polymer has good flexural properties but its melt flow rate is low.

### Example 2 - Polystyrene plus Polyterpene

The method of Example 1 is repeated with the following exceptions. Commercially available low molecular weight polyterpene resins are used as polymeric plasticizers. These resins are available from Yasuhara Chemical Co. Ltd. under the trade name CLEARON resins. The properties for blends of polystyrene and 10 percent CLEARON polyterpene resins, specifically CLEARON T0115 (Tg = 63°C) nonhydrogenated and CLEARON M115 (Tg = 61°C) semi-hydrogenated resins, are given in Table 2. The blank (Experiment B1) STYRON® 648 brand polystyrene, available from The Dow Chemical Company, is extruded twice in order to make it comparable with other blends.

**Table 2**

| Blends of STYRON® 648 and Polyterpene Resins | | | |
|---|---|---|---|
| Experiment | B1* | B2 | B3 |
| Composition | STYRON® 648 | 10% CLEARON T0115 | 10% CLEARON M115 |
| Appearance | Clear | Clear | Clear |
| MFR (g/10 min) | 2.4 | 4.9 | 4.3 |
| Vicat HDT (°C) | 108.3 | 103.3 | 105.2 |
| Flex. St. (MPa) | 94 | 91 | 95 |
| Flex. Mod. (MPa) | 2880 | 2940 | 2930 |

| | | | |
|---|---|---|---|
| *Comparative experiment | | | |

As indicated by the results in Table 2, substantial improvement in flow is obtained without any significant drop in either heat distortion properties or in any flexural strength properties. All the blends are as transparent as polystyrene B1.

## Claims

1. An optionally rubber-reinforced monovinylidene aromatic polymer composition comprising:
(a) an optionally rubber-reinforced monovinylidene aromatic polymer having a weight average molecular weight of at least 100,000; and
(b) a plasticizing amount of from 1 to 25 weight percent, based on the total weight of the matrix polymer, the plasticizer and the optional rubbery polymer, of a low molecular weight polymer of limonene having a weight average molecular weight of from 1,000 to 70,000, a volatiles content of up to 30 percent and a glass-transition temperature of at least 25°C.

2. The composition of Claim 1 wherein the polymer of (b) is a homopolymer of limonene.

3. The composition of Claim 1 or 2 wherein component (a) is at least 70 percent by weight of the composition.

4. The composition of Claim 1, 2 or 3 which is substantially free of polyphenylene oxide.

5. The composition of any of the preceding claims wherein the Tg of the polymer of (b) is at least 50°C.

6. The composition of Claim 5 wherein the Tg of the polymer of (b) is at least 70°C.

7. A monovinylidene aromatic polymer composition according to Claim 1 consisting essentially of an optionally rubber-reinforced monovinylidene aromatic polymer having a weight average molecular weight of at least 100,000 and a plasticizing amount of from 1 to 25 weight percent based on the total weight of the matrix polymer, the plasticizer and the optional rubbery polymer of a polymer of limonene having a weight average molecular weight of from 1,000 to 70,000, a volatiles content of up to 30 percent and a glass-transition temperature of at least 25°C.

8. A process for producing a closed-cell polymer foam comprising heating the composition of Claim 1 to a temperature sufficient to provide a molten polymer; admixing a blowing agent with said molten polymer to provide a plasticized mixture; heating the mixture to a temperature and applying a pressure such that the plasticized mixture does not foam; thereafter, reducing the temperature of the mixture to increase its viscosity; and extruding the plasticized mixture into a zone at a temperature and pressure sufficient to permit foaming.

9. An expandable monovinylidene aromatic polymer formulation comprising:
(a) a monovinylidene aromatic polymer having a weight average molecular weight of at least 100,000;
(b) from 1-25 wt% of a low molecular weight polymer of limonene having a weight average molecular weight of from 1,000 to 70,000, a volatiles content of up to 30 percent and a glass-transition temperature of at least 25°C;
(c) a blowing agent.

10. The formulation of Claim 9 wherein the monovinylidene aromatic polymer is polystyrene.

11. The formulation of Claim 10 wherein the limonene comprises d-limonene.

12. The formulation of Claim 10 wherein the blowing agent comprises CO₂.

13. The formulation of Claim 10 wherein the blowing agent consists essentially of CO₂.

14. A polymer foam comprising:
(a) a monovinylidene aromatic polymer having a weight average molecular weight of at least 100,000; and
(b) from 1-25 wt% of a low molecular weight polymer of limonene having a weight average molecular weight of from 1,000 to 70,000, a volatiles content of up to 30 percent and a glass-transition temperature of at least 25°C.

15. The foam of Claim 14 wherein the limonene comprises d-limonene.

## Patentansprüche

1. Wahlweise kautschukverstärkte monovinylidenaromatische Polymerzusammensetzung, umfassend:
(a) ein wahlweise kautschukverstärktes monovinylidenaromatisches Polymeres, das ein Gewichtsdurchschnittsmolekulargewicht von wenigstens 100.000 besitzt, und
(b) eine plastifizierende Menge von 1 bis 25 Gew.-%, bezogen auf das Gesamtgewicht des Matrixpolymeren, des Weichmachers und des wahlweisen kautschukartigen Polymeren, eines Limonenpolymeren mit niedrigem Molekulargewicht, das ein Gewichtsdurchschnittsmolekulargewicht von 1.000 bis 70.000, einen Gehalt an flüchtigen Bestandteilen von bis zu 30 % und einen Einfrierbereich von wenigstens 25° C besitzt.

2. Zusammensetzung nach Anspruch 1, in welcher das Polymere von (b) ein Homopolymeres von Limonen ist.

3. Zusammensetzung nach Anspruch 1 oder 2, in welcher Komponente (b) wenigstens 70 Gew.-% der Zusammensetzung ausmacht.

4. Zusammensetzung nach Anspruch 1, 2 oder 3, welche im wesentlichen frei von Polyphenylenoxid ist.

5. Zusammensetzung nach einem der vorhergehenden Ansprüche, in welcher der Tg des Polymeren (b) wenigstens 50° C ist.

6. Zusammensetzung nach Anspruch 5, in welcher der Tg des Polymeren (b) wenigstens 70° C ist.

7. Monovinylidenaromatische Polymerzusammensetzung nach Anspruch 1, bestehend im wesentlichen aus einem wahlweise kautschukverstärkten monovinylidenaromatischen Polymeren, das ein Gewichtsdurchschnittsmolekulargewicht von wenigstens 100.000 besitzt, und einer plastifizierenden Menge von 1 bis 25 Gew.% , bezogen auf das Gesamtgewicht des Matrixpolymeren, des Weichmachers und des wahlweisen kautschukartigen Polymeren, eines Limonenpolymeren mit niedrigem Molekulargewicht, das ein Gewichtsdurchschnittsmolekulargewicht von 1.000 bis 70.000, einen Gehalt an flüchtigen Bestandteilen von bis zu 30 % und einen Einfrierbereich von wenigstens 25° C besitzt.

8. Verfahren zur Herstellung eines geschlossenzelligen Polymerschaums, umfassend das Erhitzen der Zusammensetzung von Anspruch 1 bis auf eine ausreichende Temperatur zur Bereitstellung eines geschmolzenen Polymeren, Zumischen eines Blähmittels zu diesem geschmolzenen Polymeren zur Bereitstellung einer plastifizierten Mischung, Erhitzen der Mischung auf eine Temperatur und Anlegen eines Druckes derart, daß die plastifizierte Mischung nicht schäumt, danach Herabsetzen der Temperatur der Mischung zur Erhöhung ihrer Viskosität und Extrudieren der plastifizierten Mischung in eine Zone bei einer ausreichenden Temperatur und einem ausreichenden Druck, um Schäumen zu ermöglichen.

9. Expandierfähige monovinylidenaromatische Polymerzusammensetzung, umfassend:
(a) ein monovinylidenaromatisches Polymeres, das ein Gewichtsdurchschnittsmolekulargewicht von wenigstens 100.000 besitzt,
(b) von 1 bis 25 Gew.-% eines Limonenpolymeren mit niedrigem Molekulargewicht, das ein Gewichtsdurchschnittsmolekulargewicht von 1.000 bis 70.000, einen Gehalt an flüchtigen Bestandteilen von bis zu 30 Gew.-% und einen Einfrierbereich von wenigstens 25° C besitzt,
(c) ein Blähmittel.

10. Formulierung nach Anspruch 9, in welcher das monovinylidenaromatische Polymere Polystyrol ist.

11. Formulierung nach Anspruch 10, in welcher das Limonen d-Limonen umfaßt.

12. Formulierung nach Anspruch 10, in welcher das Blähmittel CO₂ umfaßt.

13. Formulierung nach Anspruch 10, in welcher das Blähmittel im wesentlichen aus CO₂ besteht.

14. Polymerschaum, umfassend:
(a) ein monovinylidenaromatisches Polymeres, das ein Gewichtsdurchschnittsmolekulargewicht von wenigstens 100.000 besitzt, und
(c) von 1 bis 25 Gew.-% eines Limonenpolymeren mit niedrigem Molekulargewicht, das ein Gewichtsdurchschnittsmolekulargewicht von 1.000 bis 70.000, einen Gehalt an flüchtigen Bestandteilen von bis zu 30 % und einen Einfrierbereich von wenigstens 25° C besitzt.

15. Schaum nach Anspruch 14, in welchem das Limonen d-Limonen umfaßt.

## Revendications

1. Composition de polymère poly(monovinylidène-aromatique), éventuellement renforcé par caoutchouc, comportant :
a) un polymère poly(monovinylidène-aromatique), éventuellement renforcé par caoutchouc et dont la masse molaire moyenne en poids vaut au moins 100 000 ;
et b) une quantité efficace, soit de 1 à 25 % en poids par rapport au poids total du polymère de matrice, du plastifiant et de l'éventuel polymère caoutchouteux, d'un plastifiant qui est un polymère de limonène à faible masse moléculaire, dont la masse molaire moyenne en poids vaut de 1 000 à 70 000, qui contient au plus 30 % de matières volatiles et qui présente une température de transition vitreuse d'au moins 25 °C.

2. Composition conforme à la revendication 1, dans laquelle le polymère (b) est un homopolymère du limonène.

3. Composition conforme à la revendication 1 ou 2, dans laquelle le composant (a) représente au moins 70 % en poids de la composition.

4. Composition conforme à la revendication 1, 2 ou 3, dans laquelle il n'y a pratiquement pas de poly(phénylène éther).

5. Composition conforme à l'une des revendications précédentes, dans laquelle la température de transition vitreuse du polymère (b) vaut au moins 50 °C.

6. Composition conforme à la revendication 5, dans laquelle la température de transition vitreuse du polymère (b) vaut au moins 70 °C.

7. Composition de pplymère poly(monovinylidène-aromatique), conforme à la revendication 1, comportant essentiellement un polymère poly(monovinylidène-aromatique), éventuellement renforcé par caoutchouc et dont la masse molaire moyenne en poids vaut au moins 100 000, et une quantité efficace, soit de 1 à 25 % en poids par rapport au poids total du polymère de matrice, du plastifiant et de l'éventuel polymère caoutchouteux, d'un plastifiant qui est un polymère de limonène dont la masse molaire moyenne en poids vaut de 1 000 à 70 000, qui contient au plus 30 % de matières volatiles et qui présente une température de transition vitreuse d'au moins 25 °C.

8. Procédé de production de mousses de polymère à cellules fermées, qui comporte le fait de chauffer une composition conforme à la revendication 1 à une température suffisante pour obtenir une masse fondue de polymère, le fait d'ajouter et mélanger un agent d'expansion à cette masse fondue de polymère, pour obtenir un mélange plastifié, le fait de chauffer ce mélange à une température et sous une pression telles que le mélange plastifié ne s'expanse pas, puis le fait de faire baisser la température du mélange pour en augmenter la viscosité, et le fait d'extruder le mélange plastifié en le faisant passer dans une zone où règnent une température et une pression telles que le mélange puisse s'expanser.

9. Formulation expansible de polymère poly(monovinylidène-aromatique), qui comporte :
a) un polymère poly(monovinylidène-aromatique) dont la masse molaire moyenne en poids vaut au moins 100 000 ;
b) de 1 à 25 % en poids d'un polymère de limonène à faible masse moléculaire, dont la masse molaire moyenne en poids vaut de 1 000 à 70 000, qui contient au plus 30 % de matières volatiles et qui présente une température de transition vitreuse d'au moins 25 °C ;
et c) un agent d'expansion.

10. Formulation conforme à la revendication 9, dans laquelle le polymère poly(monovinylidène-aromatique) est un polystyrène.

11. Formulation conforme à la revendication 10, dans laquelle le limonène comprend du d-limonène.

12. Formulation conforme à la revendication 10, dans laquelle l'agent d'expansion contient du CO₂.

13. Formulation conforme à la revendication 10, dans laquelle l'agent d'expansion est essentiellement constitué de CO₂.

14. Mousse de polymère comprenant :
a) un polymère poly(monovinylidène-aromatique) dont la masse molaire moyenne en poids vaut au moins 100 000 ;
et b) de 1 à 25 % en poids d'un polymère de limonène à faible masse moléculaire, dont la masse molaire moyenne en poids vaut de 1 000 à 70 000, qui contient au plus 30 % de matières volatiles et qui présente une température de transition vitreuse d'au moins 25 °C.

15. Mousse conforme à la revendication 14, dans laquelle le limonène comprend du d-limonène.
